# FASCICULE DE BREVET EUROPEEN

(11) **EP 2 373 435 B1**
(45) Date de publication et mention de la délivrance du brevet: **05.12.2012**
(21) Numéro de dépôt: 09795431.7
(22) Date de dépôt: 18.12.2009
(51) Int. Cl.: B08B 7/00, B23K 26/08

(54) **PROCEDE D'ABLATION D'UNE COUCHE SUPERFICIELLE D'UNE PAROI, ET DISPOSITIF ASSOCIE**
VERFAHREN ZUM ABTRAGEN EINER FLÄCHENSCHICHT EINER WAND UND ZUGEHÖRIGE VORRICHTUNG
METHOD OF ABLATING A SURFACE LAYER OF A WALL, AND ASSOCIATED DEVICE

(30) Priorité: 19.12.2008 FR 0807280
(43) Date de publication de la demande: 12.10.2011
(73) Titulaire: Commissariat à l'Énergie Atomique et aux Énergies Alternatives, 75015 Paris (FR)
(72) Inventeur: CHAMPONNOIS, François, F-91440 Bures sur Yvette (FR); BEAUMONT, François, F-91160 Saulx-les-Chartreux (FR); LASCOUTOUNA, Christian, F-91580 Souzy la Briche (FR)
(74) Mandataire: Regimbeau
(86) Numéro de dépôt international: PCT/EP2009/067541
(87) Numéro de publication internationale: WO 2010/070107

(56) Documents cités:
- WO-A1-2007/101112
- FR-A1- 2 887 161

## Description

### DOMAINE TECHNIQUE GENERAL

L'invention concerne un procédé d'ablation laser d'une couche superficielle d'une paroi telle qu'un revêtement mural de peinture, par exemple dans une installation nucléaire, et un dispositif pour la mise en oeuvre de ce procédés

### ETAT DE LA TECHNIQUE

La décontamination et l'assainissement des installations nucléaires devenues obsolètes ou ayant atteint leur limite d'âge sont devenus une priorité pour l'industrie nucléaire.

On s'efforce de nettoyer les parties contaminées de ces installations, en évitant de produire des déchets également contaminés et en tâchant de minimiser les effluents de nettoyage.

Pour une grande partie des murs des locaux nucléaires, un simple enlèvement de la peinture suffit.

Les techniques utilisées à ce jour sont notamment le décapage au moyen d'une meuleuse, d'une grignoteuse, par sablage ou par gels chimiques.

Ces techniques ont pour principal intérêt leur simplicité de mise en oeuvre technologique. Cependant, elles présentent des inconvénients tels que leur coût élevé, directement imputable à l'intervention humaine en milieu irradié, le dégagement important de poussières dans le local et la quantité de déchets générés.

Une autre solution connue pour effectuer la décontamination d'installations nucléaires consiste à utiliser l'ablation laser.

L'ablation laser consiste à retirer une couche d'épaisseur réduite du matériau contaminant à enlever, via l'interaction d'une lumière cohérente et focalisée issue d'un laser pulsé avec ce matériau.

L'échauffement rapide de la surface de cette couche provoque la vaporisation puis l'éjection des premières strates du matériau. Cette technique d'ablation laser est également applicable à d'autres domaines non nucléaires.

Les dispositifs d'ablation laser comportent typiquement une source laser prévue pour générer un faisceau laser pulsé et des moyens de transport de ce faisceau jusqu'à une tête de décapage située en aval de la source laser, et qui est pourvue d'un système optique pour focaliser les tirs sur la couche à ablater.

La tendance actuelle de l'homme du métier consiste à augmenter non seulement le nombre d'impulsions laser appliquées successivement en un même point, mais aussi les puissances des tirs laser utilisés dans ces procédés d'ablation par laser pulsé, afin d'améliorer l'efficacité de l'ablation, ces puissances étant typiquement de l'ordre de quelques centaines de watts. Il en résulte des servitudes (c'est-à-dire approvisionnements nécessaires en électricité et en air comprimé, notamment) et des contraintes de fonctionnement pénalisantes, ainsi qu'un volume et un coût de mise en oeuvre relativement élevés.

Une autre conséquence réside dans le diamètre du faisceau focalisé ayant été délivré par de tels lasers qui est de l'ordre de quelques millimètres, afin d'obtenir la puissance surfacique requise, ni trop grande, ni trop petite en fonction du matériau à traiter. Compte tenu de ces diamètres importants, de la cadence de tir élevé et des vitesses de déplacement des faisceaux réalisable la superposition des tirs est inévitable. Or, ces tirs superposés présentent l'inconvénient de favoriser les re-dépôts de matériau ablaté, obligeant l'opérateur à effectuer plusieurs passages lors du balayage de la surface à ablater pour en réduire l'importance. Le rendement de l'opération d'ablation en est d'autant pénalisé.

Pour remédier à ces inconvénients, le document FR 2 887 161 décrit un procédé d'ablation d'une couche superficielle d'une paroi par balayage de ladite couche selon le préamble de la revendication 1 et un dispositif selon le préambule de la revendication 5.

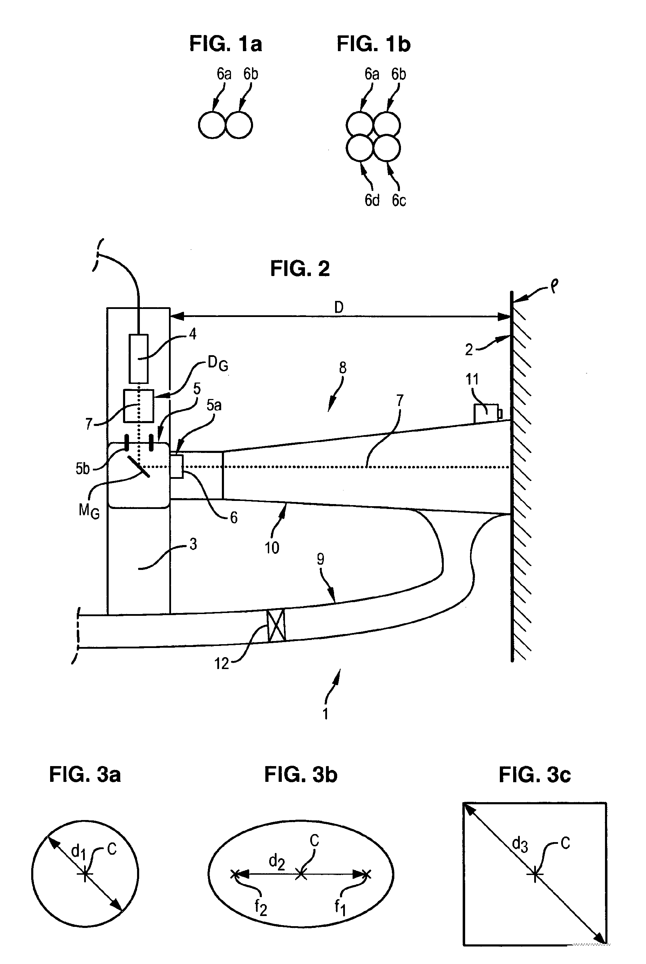

Les figures 1a et 1b montrent que le procédé de ce document est caractérisé en ce que les zones d'impacts de chaque faisceau sur la couche sont juxtaposées, soit par deux (voir les zones 6a et 6b de la figure 1a) ou par quatre, juxtaposées selon les lignes 6a, 6b et avec éventuellement un léger chevauchement selon les colonnes 6c, 6d (voir figure 1 b). L'agencement de quatre impacts (voir figure 1b) permet bien entendu de doubler la vitesse d'ablation par rapport à un agencement avec deux impacts (voir figure 1a).

Ainsi, grâce au multiplexage de plusieurs petits lasers, l'efficacité du procédé est augmentée de façon proportionnelle au nombre de laser à utiliser.

Toutefois, de tels agencements présentent des inconvénients.

Tout d'abord, pour pouvoir juxtaposer les zones d'impact comme sur les figures 1a et 1b, il est nécessaire de concevoir une chaîne optique complexe et coûteuse dans le dispositif d'ablation. En effet, dans le cas représenté, l'agencement des zones d'impacts doit être précis.

En outre, un tel dispositif d'ablation est prévu pour être utilisé sur des chantiers, et la chaîne optique précitée est très sensible aux vibrations extérieures.

Enfin, le dispositif nécessite une synchronisation temporelle extrêmement précise des pulsations laser (de l'ordre de la nanoseconde), afin d'éviter les re-dépôts de matière au moment des différents impacts.

### PRESENTATION DE L'INVENTION

L'invention permet de s'affranchir de la conception difficile de la chaîne optique et de la synchronisation temporelle, tout en permettant d'utiliser des faisceaux laser de faible puissance. Le dispositif selon l'invention est moins sensible aux dérèglements dus aux vibrations notamment.

Ainsi, selon un premier aspect, l'invention concerne un procédé d'ablation d'une couche superficielle d'une paroi selon la revendication 1.

En ayant des zones d'impacts ainsi disjointes on s'affranchit de la difficulté de conception et de réglage de la chaîne optique, et de la synchronisation temporelle, tout en évitant les redépôts de matériau ablaté. En effet, du fait de la distance entre les zones d'impacts, à chaque impact, des poussières de matières ablatées sont certes projetées de part et d'autre de la zone d'impact, mais n'influencent en rien un autre faisceau laser.

Et selon un second aspect l'invention concerne un dispositif d'ablation selon la revendication pour la mise en oeuvre du procédé selon le premier aspect de l'invention.

Le dispositif selon l'invention comprend : une pluralité de sources laser adaptées pour générer des faisceaux lasers pulsés ; un déflecteur optique en aval des têtes laser pour défléchir des faisceaux sur une couche superficielle d'une paroi ; et un dispositif de guidage adapté pour guider les faisceaux générés vers une pupille d'entrée du déflecteur optique, la pupille d'entrée étant de l'ordre de grandeur des faisceaux lasers.

Le dispositif selon l'invention est d'une complexité moindre par rapport aux dispositifs connus, puisqu'il ne nécessite pas de dispositif d'alignement dans la chaîne optique, ni la synchronisation temporelle des tirs. Par ailleurs le dispositif de l'invention est peu sensible aux vibrations extérieures, puisque la contrainte d'alignement est supprimée.

### PRESENTATION DES FIGURES

D'autres caractéristiques et avantages de l'invention ressortiront encore de la description qui suit, laquelle est purement illustrative et non limitative, et doit être lue en regard des figures annexées sur lesquelles, outre les figures 1a et 1b déjà discutées :
- la figure 2 illustre une vue schématique de côté d'un dispositif selon l'invention ;
- les figures 3a, 3b et 3c illustrent différentes zones d'impacts de faisceaux laser tirés au cours du procédé selon l'invention ;
- la figure 4 illustre des étapes du procédé selon l'invention ;
- le figure 5 illustre une vue de profil de deux faisceaux lasers impactant la surface à ablater ;
- la figure 6 illustre une passe de balayage au cours de laquelle on commande deux faisceaux selon le procédé de l'invention ;
- la figure 7 illustre une passe de balayage au cours de laquelle on commande quatre faisceaux selon le procédé de l'invention ;
- les figures 8a, 8b, 8c et 8d illustrent des configurations d'un dispositif de guidage de faisceau vers un déflecteur optique du dispositif selon l'invention.

### DESCRIPTION DETAILLEE

On a illustré sur la figure 2 un dispositif d'ablation pour ablater une couche 2 de peinture murale d'une paroi P à décontaminer, par exemple dans une installation nucléaire, ce revêtement 2 correspondant à une surface dite de catégorie 1 dans ce domaine (c'est-à-dire avec une contamination par aérosols fixés par la peinture).

L'invention s'applique bien entendu à d'autres domaines que le domaine nucléaire.

Le dispositif d'ablation 1 comporte un bâti 3 sur lequel sont montés :
- une pluralité de sources lasers 4 (une seule est représentée dans l'exemple de la figure 1) reliées à des moyens de pompage (non illustrés) ;
- un déflecteur 5 optique qui est prévu en aval des sources laser 4 pour recevoir les faisceaux laser 7 et les défléchir de manière à ce qu'ils soient animés d'un mouvement de balayage. Le déflecteur 5 comporte avantageusement à sa sortie une tête 5a de déflection comprenant une lentille de focalisation 6 pour focaliser les faisceaux 7 laser sur la surface de la couche 2 à ablater ; et
- une unité de confinement 8 de l'espace compris entre le déflecteur 5 et éventuellement la tête de déflection 5a, et la surface de la couche 2 à ablater, qui comprend notamment des moyens d'aspiration et de filtrage 9 des résidus d'ablation.

Les sources 4 lasers sont du type YLP (en anglais, *Ytterbium Fiber Lasers).* Chaque source émet un faisceau laser 7 pulsé dans le domaine infrarouge - avantageusement dans l'infrarouge proche - qui présente un diamètre allant de 2 à 15 mm et par exemple égal à 9 mm, ce diamètre étant considéré comme constant sur toute la longueur de son trajet dans l'air, mais le diamètre de chaque faisceau est diminué lors de son trajet dans le dispositif, du fait notamment de la lentille 6 de focalisation.

Comme le montrent les figures 3, chaque zone d'impact est définie par un centre C et par une dimension caractéristique d₁, d₂, ou d₃.

Les figures 3a, 3b et 3c illustrent respectivement trois formes d'impacts possibles mais non limitatives : circulaire de dimension caractéristique le diamètre d₁, ellipsoïdale de dimension caractéristique la distance d₂ entre les deux foyers f₁ et f₂ de l'ellipse, et carrée de dimension caractéristique la diagonale d₃.

Chaque dimension caractéristique est de l'ordre de 100 µm.

L'unité de confinement 8 comporte un avaloir 10 de forme sensiblement tronconique qui est adapté pour être monté par sa petite base sur le bâti 3, autour du déflecteur 5 optique. L'avaloir 10 est avantageusement pourvu d'une caméra externe 11 qui est destinée à être appliquée sur la couche 2 à ablater, cette caméra 11 étant destinée à la visualisation de l'état de la couche 2 afin de contrôler et de commander l'ablation.

L'avaloir 10 est prévu pour assurer un confinement dynamique des gaz et aérosols tout en protégeant l'opérateur et, via une entrée d'air (non représentée), il autorise un écoulement laminaire de ces gaz et aérosols afin de les récupérer dans des filtres 12 équipant les moyens d'aspiration 9 dont le débit est de 180 m³/h.

Ces filtres 12 sont spécifiquement conçus pour ne pas être colmatés par les résidus d'ablation, grâce à une caractérisation préalable de ces derniers. Le choix des filtres 12 dépend de la nature, de la masse et de la taille des particules générées par l'ablation.

Le dispositif d'ablation 1 fonctionne de la manière suivante : on met en place le dispositif d'ablation 1 contre la couche 2 de peinture à une distance D de l'ordre de 500 mm de celle-ci, via un système de positionnement (non illustré) de l'unité de confinement 8.

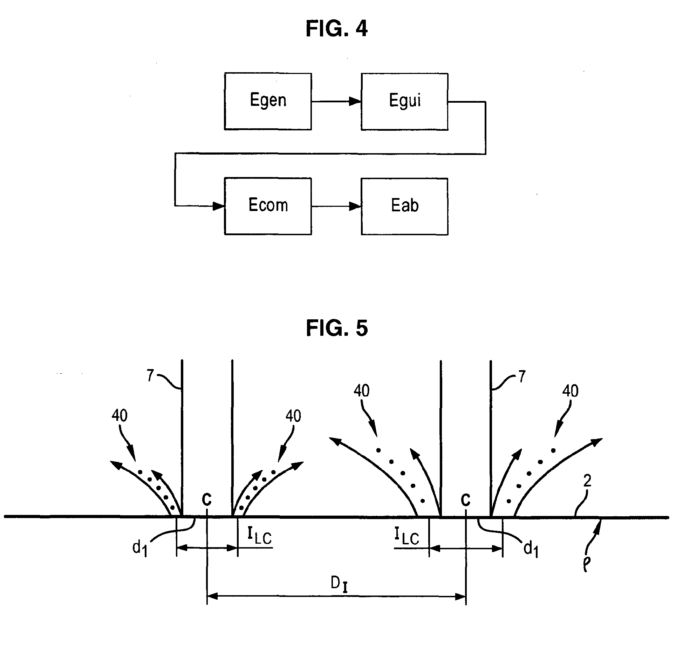

Puis, le procédé d'ablation de la couche 2 de la paroi P est mis oeuvre. La figure 4 illustre des étapes du procédé.

Le procédé d'ablation comprend une étape E_{gen} de génération d'une pluralité de faisceaux laser au moyen d'une pluralité de sources laser et une étape E_{gui} de guidage des faisceaux générés au moyen d'un dispositif D_{G} de guidage des faisceaux, vers une pupille d'entrée 5b du déflecteur 5 optique.

Un tel dispositif D_{G} de guidage permet de guider de manière simple au moins deux faisceaux dans la pupille 5b du déflecteur 5 optique du dispositif 1 d'ablation.

Le procédé d'ablation comprend une étape E_{com} de commande directionnelle par le déflecteur 5 optique d'une pluralité de faisceaux laser 7 pulsés et une étape E_{ab} d'ablation de la couche 2 sur des zones d'impacts I_{LC} créées par la pluralité de faisceaux laser, chaque zone d'impact I_{LC} étant définie par le centre C et par la dimension caractéristique d₁, d₂, d₃ (voir figures 2a, 2b et 2c).

De manière plus précise, les zones d'impacts I_{LC} sont disjointes, la distance D_{I} entre chaque centre C des zones d'impacts I_{LC} étant égale à au moins dix fois la plus grande dimension caractéristique d₁, d₂, d₃ des zones d'impacts.

Cette distance D_{I} est de préférence égale à au moins cinquante fois la plus grande dimension caractéristique d₁, d₂, d₃ des zones d'impacts et encore plus préférentiellement entre cinquante et cent fois la plus grande dimension caractéristique d₁, d₂, d₃ des zones.

On a représenté sur la figure 5, selon une vue de profil, deux faisceaux 7 laser et les zones d'impacts I_{LC} associées.

Etant donné que les zones d'impacts sont disjointes, on évite les redépôts de poussières de matières ablatées, car la distance entre les zones d'impact est telle que les poussières n'ont aucune influence sur les autres faisceaux 7. On s'affranchit de plus de la synchronisation temporelle des faisceaux. En effet, à chaque impact, des poussières 40 de matière ablatées sont projetées de part et d'autre de la zone d'impact, et selon l'invention, les poussières ne perturbent pas le procédé d'ablation, la distance entre les zones d'impacts étant suffisante. Les faisceaux laser pulsés n'ont donc pas besoin d'être synchronisés.

On s'affranchit également de la conception difficile et coûteuse (car extrêmement précise) d'une chaîne optique de positionnement des zones d'impacts selon l'art antérieur. Il suffit selon l'invention que la distance entre les zones d'impacts soit suffisante, mais il n'y a pas de contrainte de positionnement précis des zones d'impacts les unes par rapport aux autres.

Cependant, pour contrôler la zone sur laquelle s'effectue le balayage de la surface à ablater, les zones I_{LC} sur la couche sont confinées dans une surface M_{LC} entre 0,2 et 4 cm².

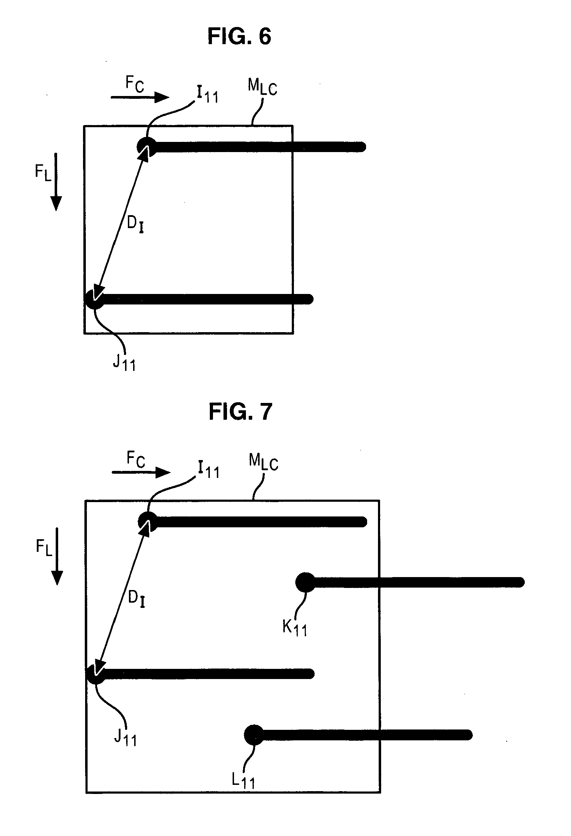

Les figures 6 et 7 illustrent une manière de balayer la couche à ablater selon un déplacement par colonne dans la direction F_{C}. Un tel déplacement est ensuite complété par un déplacement par ligne dans la direction F_{L}.

Sur la figure 6, on a représenté une passe au cours de laquelle on commande deux faisceaux lasers pulsés. A chaque passe deux zones d'impacts I_{LC}, J_{LC}sont formées sur la couche à ablater avec l'indice L correspondant à la ligne et l'indice C correspondant à la colonne. Une autre passe selon la direction Fc pourra s'effectuer après un décalage selon la direction Fl de l'ensemble des faisceaux.

De même, sur la figure 7, on a représenté une passe de balayage au cours de laquelle on commande quatre faisceaux lasers pulsés. A chaque passe, quatre faisceaux formant quatre impacts I_{Lc} J_{LC}, K_{LC}, L_{LC} avec l'indice L correspondant à la ligne et l'indice C à la colonne.

Le dispositif D_{G} de guidage peut être implémenté de plusieurs manières afin de guider les faisceaux vers la pupille d'entrée, cette dernière étant de l'ordre de grandeur de chaque faisceau laser.

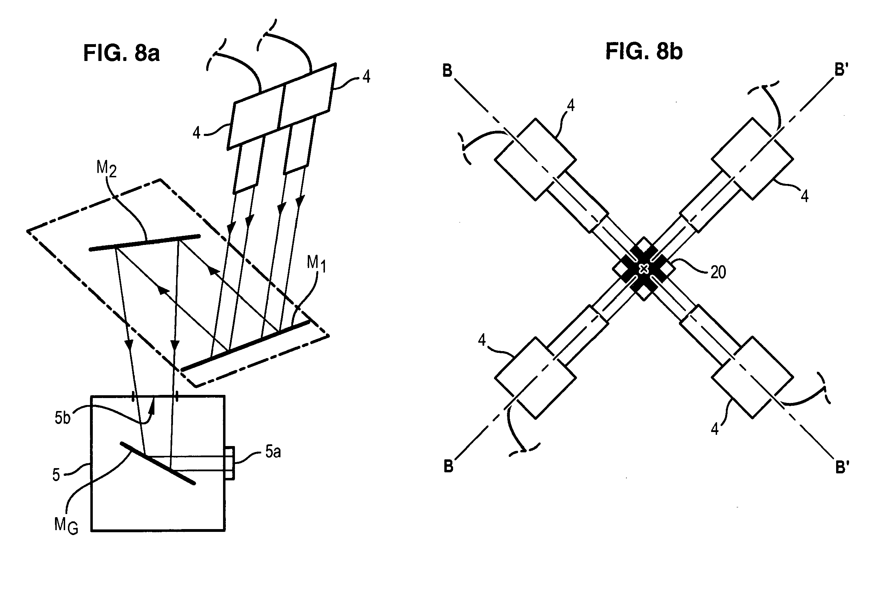

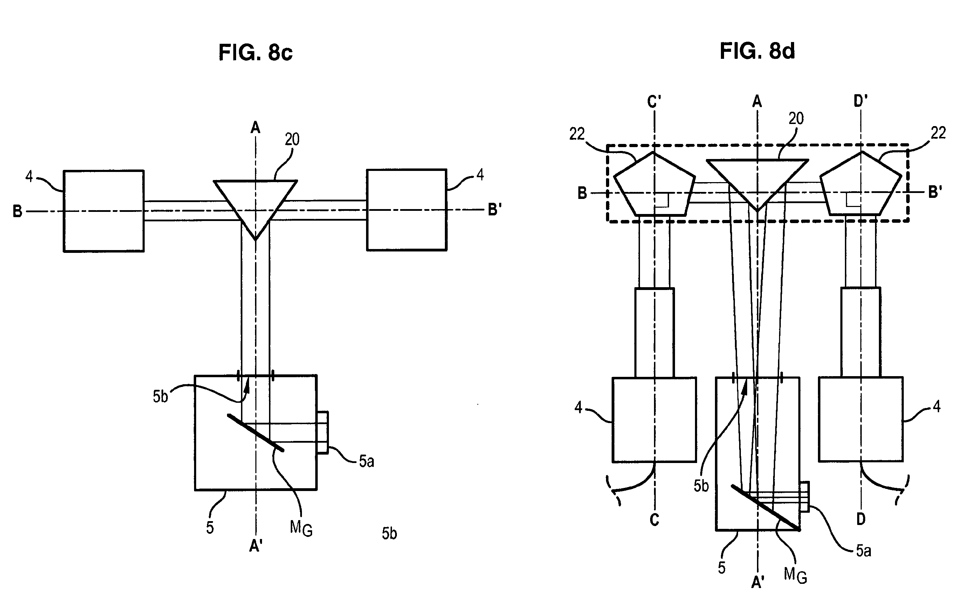

On a représenté sur les figures 8a, 8b, 8c et 8d ces différentes implémentations possibles du dispositif de guidage.

Il est à noter que l'on choisira une implémentation par rapport aux contraintes d'encombrement fixées.

Sur la figure 8a, le dispositif D_{G} de guidage comprend deux miroirs M₁, M₂ de renvoi montés en configuration baïonnette. Comme illustré sur cette figure, les faisceaux lasers issus de chaque source 4 sont réfléchis par un premier miroir M₁ et les faisceaux issus du premier miroir M₁ sont réfléchis par un deuxième miroir M₂ pour entrer dans le déflecteur 5 optique par la pupille d'entrée 5b.

Sur les figures 8b et 8c, les sources 4 laser sont montées en étoile autour d'un prisme 20 central de renvoi comportant un nombre de faces égal au nombre de sources 4.

Le dispositif présentant ainsi un premier axe optique BB' entre chaque source 4 et le prisme 20 central renvoi, et un deuxième axe optique AA' entre le prisme 20 central et la pupille d'entrée 5b du déflecteur 5 optique, chaque premier axe optique AA' et le deuxième axe optique BB' étant perpendiculaires entre eux.

Sur la figure 8d, les sources 4 laser sont montées en étoile autour d'un prisme 20 central de renvoi comportant un nombre de faces égal au nombre de sources 4.

Le dispositif D_{G} de guidage comprend un pentaprisme 22 associé à chaque source 4, chaque pentaprisme 22 étant apte à renvoyer les faisceaux issus de chaque source à laquelle il est associé vers le prisme 20 central de renvoi, le dispositif présentant ainsi
- un premier axe optique CC' entre chaque source 4 et chaque pentaprisme 22 ;
- un deuxième axe optique BB' entre chaque pentaprisme 22 et le prisme 20 central de renvoi ; et
- un troisième axe AA' optique entre le prisme 20 central et la pupille d'entrée 5b du déflecteur 5 optique.

Chaque premier axe CC' optique est perpendiculaire à chaque deuxième axe BB' optique et est parallèle au troisième axe AA' optique.

## Revendications

1. Procédé d'ablation d'une couche superficielle (2) d'une paroi (P) par balayage de ladite couche (2), comprenant
- une étape (E_{com}) de commande directionnelle par un déflecteur (5) optique d'une pluralité de faisceaux laser (7) pulsés ;
- une étape (E_{ab}) d'ablation de la couche (2) sur des zones d'impacts (I_{LC}) créées par la pluralité de faisceaux laser, chaque zone d'impact (I_{LC}) étant définie par un centre (C) et par une dimension caractéristique (d₁, d₂, d₃) , les zones d'impact (I_{LC}) étant disjointes;
**caractérisé en ce que** la distance (D_{I}) entre chaque centre (C) des zones d'impact (I_{LC}) est égale à au moins dix fois la plus grande dimension caractéristique (d₁, d₂, d₃) des zones d'impacts.

2. Procédé selon la revendication 1, **caractérisé en ce que** les zones d'impact (I_{LC}) sur la couche sont confinées dans une surface (M_{LC}) de l'ordre de 1 cm²_{.}

3. Procédé selon l'une des revendications précédentes, **caractérisé en ce qu'**il comprend antérieurement à l'étape (E_{c}) de commande :
- une étape (Egₑₙ) de génération d'une pluralité de faisceaux laser pulsés au moyen d'une pluralité de sources (4) laser ;
- une étape (E_{gui}) de guidage des faisceaux générés au moyen d'un dispositif (D_{G}) de guidage des faisceaux, vers une pupille (5b) d'entrée du déflecteur (5) optique.

4. Procédé selon l'une des revendications précédentes, **caractérisé en ce que** la distance (D_{I}) entre chaque centre (C) des zones d'impact (I_{LC}) est comprise entre cinquante fois et cent fois la plus grande dimension caractéristique (d₁, d₂, d₃) des zones d'impacts.

5. Dispositif d'ablation (1) pour la mise en oeuvre du procédé selon l'une des revendications précédentes, ledit dispositif comprenant
- une pluralité de sources laser (4) adaptées pour générer (E_{gen}) des faisceaux lasers pulsés (7) ;
- un déflecteur (5) optique en aval des sources (4) laser pour défléchir les faisceaux (7) sur une couche superficielle (2) d'une paroi (P) ; et
- un dispositif de guidage (D_{G}) adapté pour guider les faisceaux (7) générés vers une pupille (5b) d'entrée du déflecteur (5) optique, la pupille d'entrée étant de l'ordre de grandeur de chaque faisceau (7) laser ;
le dispositif étant adapté pour que les zones d'impacts (I_{LC}) soient disjointes, **caractérisé en ce que** le dispositif est aussi adapté pour que la distance (D_{I}) entre chaque centre (C) des zones d'impact (I_{LC}) soit égale à au moins dix fois la plus grande dimension caractéristique (d₁, d₂, d₃) des zones d'impacts.

6. Dispositif selon la revendication 5, **caractérisé en ce que** le dispositif de guidage comprend deux miroirs (M₁, M₂) de renvoi montés en configuration baïonnette et **en ce que** les sources (4) laser sont montées de sorte que tous les faisceaux issus de ces sources soient réfléchis par un premier miroir (M1) vers un deuxième miroir (M2) réfléchissant les faisceaux vers la pupille d'entrée (5b) du déflecteur (5) optique.

7. Dispositif selon la revendication 5, **caractérisé en ce que** les sources (4) laser sont montées en étoile autour d'un prisme (20) central de renvoi comportant un nombre de faces égal au nombre de sources (4), le dispositif présentant ainsi
un premier axe optique (BB') entre chaque source (4) et le prisme (20) central renvoi, et
un deuxième axe optique (AA') entre le prisme (20) central et la pupille d'entrée (5b) du déflecteur (5) optique,
chaque premier axe optique (AA') et le deuxième axe optique (BB') étant perpendiculaires entre eux.

8. Dispositif selon la revendication 5, **caractérisé en ce que** les sources (4) laser sont montées en étoile autour d'un prisme (20) central de renvoi comportant un nombre de faces égal au nombre de sources (4), et **en ce que** le dispositif (D_{G}) de guidage comprend un pentaprisme (22) associé à chaque source (4), chaque pentaprisme (22) étant apte à renvoyer les faisceaux issus de chaque source à laquelle il est associé vers le prisme (20) central de renvoi, le dispositif présentant ainsi
- un premier axe optique (CC') entre chaque source et chaque pentaprisme (22) ;
- un deuxième axe optique (BB') entre chaque pentaprisme (22) et le prisme (20) central de renvoi ;
- un troisième axe (AA') optique entre le prisme (20) central et la pupille d'entrée (5b) du déflecteur (5) optique ;
chaque premier axe (CC') optique étant perpendiculaire à chaque deuxième axe (BB') optique et étant parallèle au troisième axe (AA') optique.

## Claims

1. Method of ablating a surface layer (2) of a wall (P) by sweeping said layer (2), comprising
- a step (E_{com}) of directional control by an optical deflector (5) of a plurality of pulsed laser beams (7);
- a step (E_{ab}) of ablating the layer (2) on impact zones (I_{LC}) created by the plurality of laser beams, each impact zone (I_{LC}) being defined by a centre (C) and by a characteristic dimension (d₁, d₂, d₃), the impact zones (I_{LC}) being disjointed;
**characterised in that** the distance (D_{I}) between each centre (C) of the impact zones (I_{LC}) is equal to at least ten times the largest characteristic dimension (d₁, d₂, d₃) of the impact zones.

2. Method according to claim 1, **characterised in that** the impact zones (I_{LC}) on the layer are confined within a surface (M_{LC}) of the order of 1 cm².

3. Method according to one of the preceding claims, **characterised in that** it comprises prior to the control step (E_{c}):
- a step (E_{gen}) of generating a plurality of pulsed laser beams by means of a plurality of laser sources (4) ;
- a step (E_{gui}) of guiding beams generated by means of a beam guiding device (D_{G}), to an entrance pupil (5b) of the optical deflector (5).

4. Method according to one of the preceding claims, **characterised in that** the distance (D_{I}) between each centre (C) of the impact zones (I_{LC}) is between fifty times and one hundred times the largest characteristic dimension (d₁, d₂, d₃) of the impact zones.

5. Ablating device (1) for the implementation of the method according to one of the preceding claims, said device comprising:
- a plurality of laser sources (4) adapted to generate (E_{gen}) pulsed laser beams (7) ;
- an optical deflector (5) downstream of the laser sources (4) to deflect the beams (7) on a surface layer (2) of a wall (P); and
- a guiding device (D_{G}) adapted to guide the beams (7) generated to an entrance pupil (5b) of the optical deflector (5), the entrance pupil being of the order of magnitude of each laser beam (7);
the device being adapted such that the impact zones (I_{LC}) are disjointed, **characterised in that** the device is also adapted so that the distance (D_{I}) between each centre (C) of the impact zones (I_{LC}) is equal to at least ten times the largest characteristic dimension (d₁, d₂, d₃) of the impact zones.

6. Device according to claim 5, **characterised in that** the guiding device comprises two reflecting mirrors (M₁, M₂) arranged in bayonet configuration and **in that** the laser sources (4) are arranged such that all of the beams from said sources are reflected by a first mirror (M1) to a second mirror (M2) reflecting the beams to the entrance pupil (5b) of the optical deflector (5).

7. Device according to claim 5, **characterised in that** the laser sources (4) are arranged in star shape around a central deflecting prism (20) comprising a number of faces equal to the number of sources (4), the device thus having:
- a first optical axis (BB') between each source (4) and the central deflecting prism (20), and
- a second optical axis (AA') between the central prism (20) and the entrance pupil (5b) of the optical deflector (5),
each first optical axis (AA') and the second optical axis (BB') being perpendicular with each other.

8. Device according to claim 5, **characterised in that** the laser sources (4) are arranged in a star shape around a central deflecting prism (20) comprising a number of faces equal to the number of sources (4), and **in that** the guiding device (D_{G}) comprises a pentaprism (22) associated with each source (4), each pentaprism (22) being able to return the beams from each source with which it is associated to the central deflecting prism (20), the device thus having:
- a first optical axis (CC') between each source and each pentaprism (22);
- a second optical axis (BB') between each pentaprism (22) and the central deflecting prism (20);
- a third optical axis (AA') between the central prism (20) and the entrance pupil (5b) of the optical deflector (5) ;
each first optical axis (CC') being perpendicular to each second optical axis (BB') and being parallel to the third optical axis (AA').

## Patentansprüche

1. Verfahren zum Abtragen einer Flächenschicht (2) einer Wand (P) durch Abtasten der Schicht (2), umfassend
- einen Schritt (E_{com}) zur Richtungssteuerung einer Vielzahl von gepulsten Laserstrahlen (7) durch einen optischen Ablenker (5);
- einen Schritt (E_{ab}) zum Abtragen der Schicht (2) in Auftreffbereichen (I_{LC}), die durch die Vielzahl von Laserstrahlen entstanden sind, wobei jeder Auftreffbereich (1_{LC}) durch einen Mittelpunkt (C) und durch eine charakteristische Abmessung (d₁, d₂, d₃) definiert ist, wobei die Auftreffbereiche (1_{LC}) getrennt sind;
**dadurch gekennzeichnet, dass** der Abstand (D_{I}) zwischen jedem Mittelpunkt (C) der Auftreffbereiche (I_{LC}) dem mindestens Zehnfachen der größten charakteristischen Abmessung (d₁, d₂, d₃) der Auftreffbereiche entspricht.

2. Verfahren nach Anspruch 1, **dadurch gekennzeichnet, dass** die Auftreffbereiche (I_{LC}) auf der Schicht auf eine Fläche (M_{LC}) in der Größenordnung von 1 cm² beschränkt sind.

3. Verfahren nach einem der vorhergehenden Ansprüche, **dadurch gekennzeichnet, dass** es vor dem Steuerungsschritt (E_{c}) Folgendes umfasst:
- einen Schritt (E_{gen}) zur Erzeugung einer Vielzahl von gepulsten Laserstrahlen mittels einer Vielzahl von Laserquellen (4);
- einen Schritt (E_{gui}) zum Lenken der erzeugten Strahlen mittels einer Vorrichtung (D_{G}) zum Lenken der Strahlen in Richtung einer Eintrittspupille (5b) des optischen Ablenkers (5).

4. Verfahren nach einem der vorhergehenden Ansprüche, **dadurch gekennzeichnet, dass** der Abstand (D_{I}) zwischen jedem Mittelpunkt (C) der Auftreffbereiche (I_{LC}) zwischen dem Fünfzigfachen und Hundertfachen der größten charakteristischen Abmessung (d₁, d₂, d₃) der Auftreffbereiche liegt.

5. Abtragungsvorrichtung (1) zur Durchführung des Verfahrens nach einem der vorhergehenden Ansprüche, wobei die Vorrichtung Folgendes umfasst:
- eine Vielzahl von Laserquellen (4), die ausgestaltet sind, um gepulste Laserstrahlen (7) zu erzeugen (E_{gen});
- einen optischen Ablenker (5) hinter den Laserquellen (4) zum Ablenken der Strahlen (7) auf eine Flächenschicht (2) einer Wand (P), und
- eine Lenkvorrichtung (D_{G}), die ausgestaltet ist, die erzeugten Strahlen (7) in Richtung einer Eintrittspupille (5b) des optischen Ablenkers (5) zu lenken, wobei die Eintrittspupille in der Größenordnung jedes Laserstrahls (7) liegt;
wobei die Vorrichtung ausgestaltet ist, damit die Auftreffbereiche (I_{LC}) getrennt sind, **dadurch gekennzeichnet, dass** die Vorrichtung ebenfalls ausgestaltet ist, damit der Abstand (D_{I}) zwischen jedem Mittelpunkt (C) der Auftreffbereiche (I_{LC}) dem mindestens Zehnfachen der größten charakteristischen Abmessung (d₁, d₂, d₃) der Auftreffbereiche entspricht.

6. Vorrichtung nach Anspruch 5, **dadurch gekennzeichnet, dass** die Lenkvorrichtung zwei Umlenkspiegel (M₁, M₂) umfasst, die in Bajonettanordnung montiert sind, und dadurch, dass die Laserquellen (4) erart montiert sind, dass sämtliche Strahlen, die von diesen Quellen stammen, von einem ersten Spiegel (M1) in Richtung eines zweiten Spiegels (M2) reflektiert werden, der die Strahlen in Richtung der Eintrittspupille (5b) des optischen Ablenkers (5) reflektiert.

7. Vorrichtung nach Anspruch 5, **dadurch gekennzeichnet, dass** die Laserquellen (4) sternförmig um ein mittiges Umlenkprisma (20) montiert sind, das eine Anzahl von Flächen aufweist, die der Anzahl der Quellen (4) entspricht, wobei die Vorrichtung somit Folgendes aufweist:
eine erste optische Achse (BB') zwischen jeder Quelle (4) und dem mittigen Umlenkprisma (20), und
eine zweite optische Achse (AA') zwischen dem mittigen Prisma (20) und der Eintrittspupille (5b) des optischen Ablenkers (5),
wobei jede erste optische Achse (AA') und die zweite optische Achse (BB') senkrecht zueinander verlaufen.

8. Vorrichtung nach Anspruch 5, **dadurch gekennzeichnet, dass** die Laserquellen (4) sternförmig um ein mittiges Umlenkprisma (20) montiert sind, das eine Anzahl von Flächen aufweist, die der Anzahl der Quellen (4) entspricht, und dadurch, dass die Lenkvorrichtung (D_{G}) ein Pentaprisma (22) umfasst, das jeder Quelle (4) zugehörig ist, wobei jedes Pentaprisma (22) in der Lage ist, die Strahlen, die von jeder Quelle stammen, der es zugehörig ist, in Richtung des mittigen Umlenkprismas (20) zu reflektieren, wobei die Vorrichtung somit Folgendes aufweist:
- eine erste optische Achse (CC') zwischen jeder Quelle und jedem Pentaprisma (22);
- eine zweite optische Achse (BB') zwischen jedem Pentaprisma (22) und dem mittigen Umlenkprisma (20);
- eine dritte optische Achse (AA') zwischen dem mittigen Prisma (20) und der Eintrittspupille (5b) des optischen Ablenkers (5);
wobei jede erste optische Achse (CC') senkrecht zu jeder zweiten optischen Achse (BB') verläuft und parallel zur dritten optischen Achse (AA') verläuft.
